# EUROPEAN PATENT APPLICATION

(11) **EP 2 184 586 A2**
(43) Date of publication of application: **12.05.2010**
(21) Application number: 09174103.3
(22) Date of filing: 27.10.2009
(51) Int. Cl.: G01D 9/00, G08C 15/00

(54) **Modular data collection module with standard communication interface**

(30) Priority: 05.11.2008 US 265326
(71) Applicant: General Electric Company, Schenectady, NY 12345 (US)
(72) Inventor: Hayashida, Robert Donald, Stateline, NV 89449 (US); Whiteley, Joseph Lee, Gardnerville, NV 89460 (US)
(74) Representative: Bedford, Grant Richard

(57) **Abstract**

A modular data collection module (10) is provided. The module includes a data collection module (10) configured to condition and sample signals (18) from one or more of a plurality of measuring devices (22) that operably detect the condition of a machine, the data collection module (10) includes a Universal Serial Bus (USB) interface (12) configured to interchangeably connect the data collection module (10) to at least one of a plurality of host platforms (14) forming an integrated data collection unit (16).

## Description

The subject matter disclosed herein relates to a data collection module and, more particularly, to a data collection module that is modular in design and is configured to connect to various host devices by means of a Universal Serial Bus (USB) interface.

Machine condition monitoring has expanded in recent years to include portable data collection. This is typically accomplished by means of a handheld host device that is tethered to transducers or measurement sensors by one or more cables. The transducers are temporarily or permanently mounted at specified points on industrial machinery at a customer's site to measure parameters such as vibration, temperature, or other process variables. These parameters are stored and trended over time to help in the diagnosis of fault conditions and planning for machine repairs so that the availability of a machine can be improved.

Today, these measurement types have been expanded so that multiple pieces of portable equipment are required to capture all of the data available to assess the condition or "health" of machines. These devices include items such as speed sensors, infrared temperature guns, thermal imaging cameras, and current transformers. For the most part, each piece of additional equipment captures data in its own format that is independent of the portable data collector. The information has to be correlated into a single platform to effectively evaluate and manage the machines condition.

In one embodiment of the present invention, a modular data collection module is provided. The modular data collection modules includes a data collection module configured to condition and sample signals from one or more of a plurality of measuring devices that operably detect the condition of a machine, the data collection module includes a Universal Serial Bus (USB) interface configured to interchangeably connect the data collection module to at least one of a plurality of host platforms forming an integrated data collection unit.

In another embodiment, a data collection system is provided. The system includes a modular data collection module having a Universal Serial Bus (USB) interface, the data collection module configured to process signals from one or more of a plurality of measuring devices that operably detect the condition or state of a machine or process; and a host platform coupled to the modular data collection module via the USB interface forming an integrated data collection unit, the host platform configured to enable a user to control the operations of the modular data collection module.

In yet another embodiment, a data collection system is provided. The system includes a modular data collection module having a Universal Serial Bus (USB) interface, the modular data collection module configured to process signals from one or more of a plurality of measuring devices that operably detect the condition of a machine, the modular data collection module further including at least one signal input port configured to connect to one or more of the plurality of measuring devices, each of the plurality of measuring devices being configured to enable the performance of at least one of a number of measurements; and a hand-held host platform coupled to the data collection module via the USB interface, the hand-held host platform configured to enable a user to control the operations of the modular data collection module.

Various advantages and features will become more apparent from the following description taken in conjunction with the drawings.

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic of a modular data collection module in accordance with one exemplary embodiment of the present invention;
FIG. 2 is a schematic of a data collection system with the modular data collection module being connected to a host platform via a Universal Serial Bus (USB) interface in accordance with one exemplary embodiment of the present invention;
FIG. 3 is a schematic of a portable hand-held device used as the host platform for the data collection module in accordance with one exemplary embodiment of the present invention; and
FIG. 4 is a schematic of the portable hand-held device being connected to the data collection module by a mounting slot built into a housing of the portable hand-held device in accordance with one exemplary embodiment of the present invention.

The detailed description explains embodiments of the invention, together with advantages and features, by way of example with reference to the drawings.

Exemplary embodiments are directed to a data collection module that is modular in design such that the data collection module can be connected to various host devices (e.g., laptop, desktop, etc.) in accordance with one embodiment of the present invention. This modular approach separates the data collection hardware from the host platform such that one of various application-specific data collection modules can be interchangeably connected to one of various host platforms thereby forming an integrated data collection unit or system. These embodiments allow for flexibility and scalability of the portable data collection module by having a data collection module that interfaces to a host platform via an industry standard interface, such as the Universal Serial Bus (USB), in accordance with one exemplary embodiment. Further in these embodiments, additional data collection modules can be developed for different measurement collection types (e.g., temperature, motor current, etc.). Utilizing the industry standard interface allows these additional modules to be connected to various host devices. For example, a user can connect the data collection module to a desktop or laptop computer running the accompanying application software for the data collection instead of using the portable handheld host.

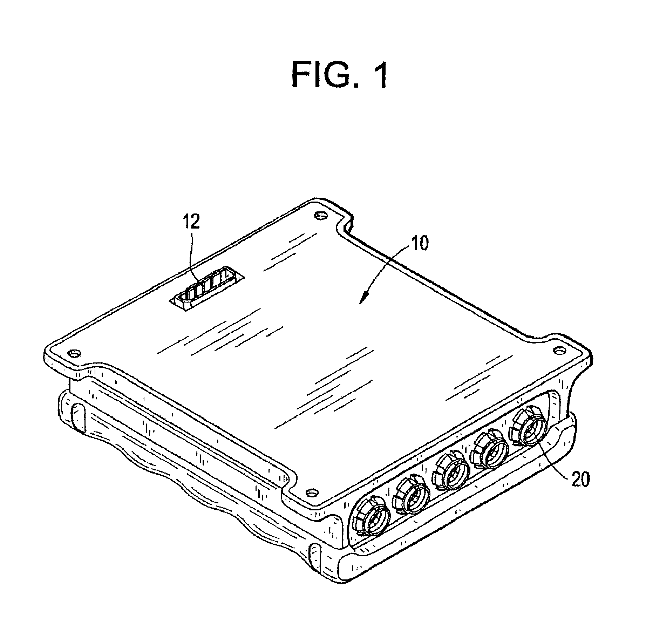

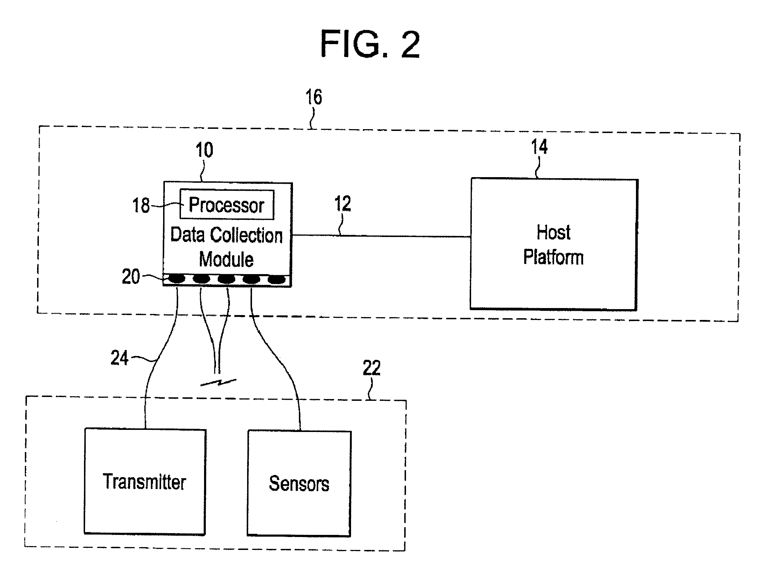

For a better understanding of the invention and its operation, turning now to the drawings, Figure 1 illustrates a data collection module 10 in accordance with one exemplary embodiment. In one embodiment, the data collection module 10 is modular in design and includes an interface 12 for connecting the data collection module 10 to various host devices, such as host platform 14. In one non-limiting exemplary embodiment, the interface 12 for connecting the data collection module 10 to various host platforms is a Universal Serial Bus (USB) interface. As such, the data collection module 10 can be connected to the host platform 14 via the USB interface, which can effectively form an integrated data collection unit or system 16 in accordance with one exemplary embodiment. Of course, the interface 12 can be a direct connection between the data collection module 10 and the host platform 14 by mechanical attachment using an electrical connector or by a cable between the data collection module 10 and the host platform 14. The data collection system 16 is better illustrated in Figure 2.

In one embodiment, the data collection module 10 is a dynamic signal input module (DSIM), a rugged electronic assembly that mates to and communicates with the host platform 14. In one embodiment, the data collection module 10 is a signal-processing device configured to process data relating to the condition of a machine or process. The data collection module 10 includes a signal processor 18 for conditioning and sampling signals and performing various measurements on the signals. The signal processor 18 can be any conventional processing unit configured for carrying out the methods and/or functions described herein. In one exemplary embodiment, the signal processor 18 comprises a combination of hardware and/or software/firmware with a application program that, when loaded and executed, permits the signal processor 18 to operate such that it carries out the methods described herein.

In one embodiment, the data collection module 10 further includes signal input ports 20 configured to power and receive signals from one or more of a plurality of measuring devices 22 (e.g., accelerometer, transducer, etc.) that may vary in nature and operation. Figures 1 and 2 illustrate five signal input ports 20 on the data collection module 10. However, it should be understood that the number of signal input ports 20 on the data collection module 10 could vary depending on the application, its type, and the required signal conditioning circuit inside the data collection module 10.

In accordance with one embodiment, the data collection module 10 can be at least one of many different application-specific data collection type devices for receiving signals from the plurality of measuring devices 22 to detect the condition of a machine or process depending on the application. For example, the data collection module 10 can be configured or developed to sample and collect raw analog vibration signals, which are often indicative of the condition of a machine, from a transducer and take those raw vibration signals and perform various measurements on the same. For example, the data collection module 10 can perform digital filtering on the raw vibration signals. Of course, the data collection module 10 can be developed for different measurement collection types (e.g., temperature, motor current, etc.) and should not be limited to the configurations described herein. Further, the data collection module 10 can perform other measurements, such as decimation on conditioned signals, and should not be limited to the examples set forth herein.

In accordance with one embodiment, the data collection module 10 is connected to one or more of the plurality of measuring devices 22 through a connecting means, such as a field detachable cable 24. In particular, one end of the field detachable cable 24 is received by one of the signal input ports 20 of the data collection module 10 while another end is connected to one of the measuring devices 22 as shown. Of course, other connecting means can be used to connect the data collection module 10 to one or more of the plurality of measuring devices 22 such that the data collection module 10 is capable of powering and receiving signals from one or more of the plurality of measuring devices 22. The plurality of measuring devices 16 can include transmitters, transducers, accelerometers, eddy current proximity probes, industrial temperature probes, or any other device that is capable of generating a measured signal.

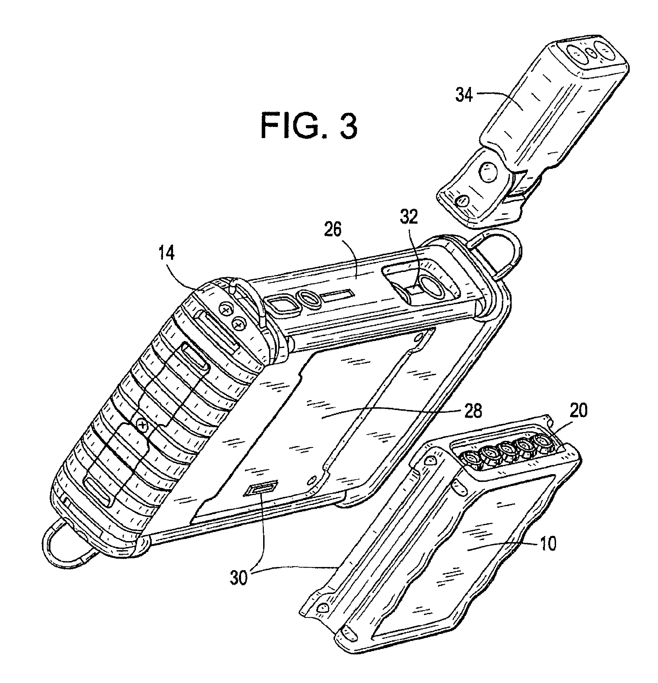

In accordance with one embodiment, the host platform 14 can be one of various types of host platforms. The host platform 14 is a platform for enabling a user to control the operations of collecting and analyzing data through the data collection module 10. In one non-limiting exemplary embodiment, the host platform is a portable hand-held device configured to collect different types of performance and process related information from industrial machinery (e.g., pumps, motors, gearboxes, etc.) or processes as shown in Figure 3. In one embodiment, the portable handheld device comprises a housing 26 with a multiple part design made from a die cast magnesium, aluminum, or molded plastic in accordance with one non-limiting embodiment. The portable device also includes a base 28 designed to allow for the data collection module 10 and future data collection modules with the same package dimensions to mate to it. In one embodiment, the host may include various command buttons (not shown) for controlling the operations of the data collection module 10 and a display screen (not shown) for viewing the collected or analyzed data.

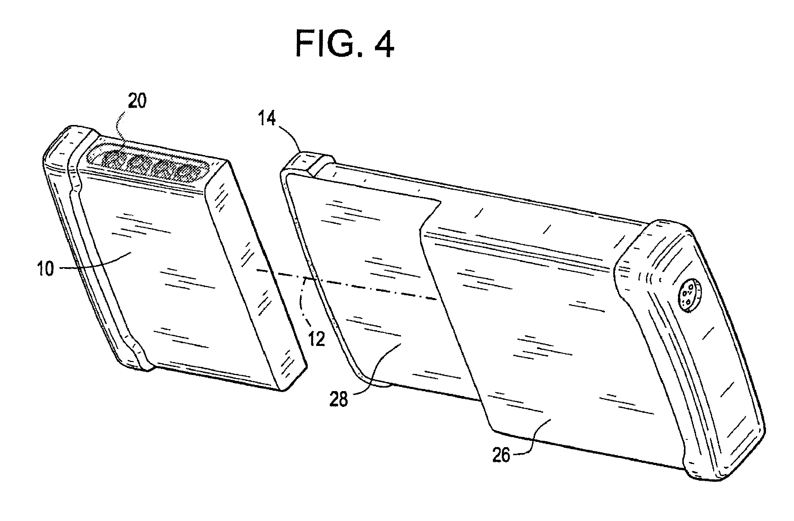

The data collection module 10 can be connected to the host by mechanical attachment. In accordance with one exemplary configuration, the data collection module 10 can be connected to the host by a mounting slot (not shown) built into the housing 26 or the back of the of the host platform as shown in Figure 4. In another embodiment, the data collection module 10 is connected to the portable device (e.g., laptop or desktop) via the USB interface 12. Specifically, the data collection module 10 and the portable handheld device each includes a USB mating connector 30 that are configured to mate with one another. The portable device configuration shown in Figure 3 is exemplary in nature and should not be limiting. Although the host platform 14 is discussed in the context of a portable device, it should be understood that other types of host platforms can be used in other exemplary embodiments of the present invention.

For example, in another non-limiting exemplary embodiment, the host platform 14 is a laptop or desktop computer. Of course, other types of host platforms can be used in other exemplary embodiments and should not be limited to those described herein. In one embodiment, the data collection module 10 is connected to the host platform 14 by means of an interface cable.

In accordance with one embodiment, the host platform 14 includes a USB connector 32 configured to receive at least one auxiliary attachment 34, such as an infrared temperature and laser tachometer, thermal imaging device, a global positioning system (GPS) and barcode scanner, etc, that can be operated in conjunction with the data collection module 10 in accordance with one embodiment. Of course, auxiliary attachment 34 can be operated separate from the data collection module 10 in other exemplary embodiments. The USB interface 12 of the data collection module 10 enables the data collection module 10 to receive signals from the auxiliary attachment 34 when the data collection module 10 is connected to the host platform 14 and the auxiliary attachment 34 is connected to the USB connector 32 of the host platform 14.

In the exemplary embodiments above, a single host platform can be used to interface with multiple application-specific data collection modules, where each data collection module can be designed for a specific measurement type. Further modules can be developed to interface with existing host platforms as the need arises. For example, customer A can use a general purpose host device (ie laptop, desktop, tablet or ultra mobile PC) to interface to the data collection module while customer B, who must collect data in a hazardous (classified) area must interface to the data collection module with a host device that is approved for use in that area.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A modular data collection system, comprising:
   a data collection module configured to condition and sample signals from one or more of a plurality of measuring devices that operably detect the condition of a machine, the data collection module includes a Universal Serial Bus (USB) interface configured to interchangeably connect the data collection module to at least one of a plurality of host platforms forming an integrated data collection unit.
2. The modular data collection module of clause 1, wherein the data collection module includes at least one signal input port configured to connect to one or more of the plurality of measuring devices, each of the plurality of measuring devices is configured to enable the performance of at least one of a number of measurements.
3. The modular data collection module of any preceding clause, wherein the at least one signal input port is configured to receive a detachable cable for connecting one or more of the plurality of measurement devices to the data collection module.
4. The modular data collection module of any preceding clause, wherein the USB interface of the data connection module enables the plurality of measuring devices to connect to at least one of the plurality of host platforms.
5. The modular data collection module of any preceding clause, wherein the data collection module is configured to power up and receive signals from the plurality of measurement devices.
6. The modular data collection module of any preceding clause, wherein one of the plurality of host platforms is a portable hand-held device configured to control the operations of the data collection module.
7. The modular data collection module of any preceding clause, wherein one of the plurality of host platforms is a desktop or a laptop computer.
8. The modular data collection module of any preceding clause, wherein one of the plurality of host platforms includes a USB connector configured to receive at least one of a plurality of auxiliary attachments.
9. The modular data collection module of any preceding clause, wherein the data collection module includes a processor for conditioning and sampling signals received by the data collector module.
10. A data collection system, comprising:
   a modular data collection module having a Universal Serial Bus (USB) interface, the data collection module configured to process signals from one or more of a plurality of measuring devices that operably detect the condition or state of a machine or process; and
   a host platform coupled to the modular data collection module via the USB interface forming an integrated data collection unit, the host platform configured to enable a user to control the operations of the modular data collection module.
11. The data collection system of any preceding clause, wherein the USB interface of the modular data collection module enables the modular data collection module to interchangeably connect to another host platform forming another integrated data collection unit.
12. The data collection system of any preceding clause, wherein the modular data collection module includes at least one signal input port configured to connect to one or more of the plurality of measuring devices, each of the plurality of measuring devices is configured to enable the performance of at least one of a number of measurements.
13. The data collection system of any preceding clause, wherein the at least one signal input port is configured to receive a detachable cable for connecting one or more of the plurality of measurement devices to the modular data collection module.
14. The data collection system of any preceding clause, wherein the USB interface of the modular data connection module enables the plurality of measuring devices to connect to the host platform.
15. The data collection system of any preceding clause, wherein the modular data collection module is configured to power up and receive signals from the plurality of measurement devices.
16. The data collection system of any preceding clause, wherein the host platform is a portable hand-held device and includes a USB connector configured to receive at least one of a plurality of auxiliary attachments.
17. The data collection system of any preceding clause, wherein the modular data collection module includes a processor for conditioning and sampling signals received by the modular data collector module.
18. An integrated data collection system, comprising:
   a modular data collection module having a Universal Serial Bus (USB) interface, the modular data collection module configured to process signals from one or more of a plurality of measuring devices that operably detect the condition of a machine, the modular data collection module further including at least one signal input port configured to connect to one or more of the plurality of measuring devices, each of the plurality of measuring devices being configured to enable the performance of at least one of a number of measurements; and
   a hand-held host platform coupled to the data collection module via the USB interface, the hand-held host platform configured to enable a user to control the operations of the modular data collection module.
19. The integrated data collection system of any preceding clause, wherein the modular data collection module is configured to power up and receive signals from the plurality of measurement devices.
20. The integrated data collection system of any preceding clause, wherein the hand-held host platform includes a USB connector configured to receive at least one of a plurality of auxiliary attachments.

## Claims

1. A modular data collection system (16), comprising:
a data collection module (10) configured to condition and sample signals from one or more of a plurality of measuring devices (22) that operably detect the condition of a machine, the data collection module (10) includes a Universal Serial Bus (USB) interface (12) configured to interchangeably connect the data collection module (10) to at least one of a plurality of host platforms (14) forming an integrated data collection unit (16).

2. The modular data collection module (10) of claim 1, wherein the data collection module (10) includes at least one signal input port (20) configured to connect to one or more of the plurality of measuring devices (24), each of the plurality of measuring devices (22) is configured to enable the performance of at least one of a number of measurements.

3. The modular data collection module (10) of any preceding claim, wherein the at least one signal input port (20) is configured to receive a detachable cable (24) for connecting one or more of the plurality of measurement devices (22) to the data collection module (10).

4. The modular data collection module (10) of any preceding claim, wherein the USB interface (12) of the data connection module enables the plurality of measuring devices (22) to connect to at least one of the plurality of host platforms (14).

5. The modular data collection module (10) of any preceding claim, wherein the data collection module (10) is configured to power up and receive signals from the plurality of measurement devices (22).

6. The modular data collection module (10) of any preceding claim, wherein one of the plurality of host platform (14) is a portable hand-held device configured to control the operations of the data collection module (10).

7. The modular data collection module (10) of any preceding claim, wherein one of the plurality of host platforms (14) is a desktop or a laptop computer.

8. The modular data collection module (10) of any preceding claim, wherein one of the plurality of host platforms (14) includes a USB connector (32) configured to receive at least one of a plurality of auxiliary attachments (34).

9. The modular data collection module (10) of any preceding claim, wherein the data collection module (10) includes a processor for conditioning and sampling signals received by the data collector module (10).
